(19) Europäisches Patentamt
European Patent Office
Office européen des brevets

(11) **EP 2 139 825 B1**

(12) **FASCICULE DE BREVET EUROPEEN**

(45) Date de publication et mention
de la délivrance du brevet:
**01.12.2010 Bulletin 2010/48**

(21) Numéro de dépôt: **08788045.6**

(22) Date de dépôt: **26.03.2008**

(51) Int Cl.:
*C04B 35/103* (2006.01)     *C04B 35/101* (2006.01)

(86) Numéro de dépôt international:
**PCT/FR2008/050519**

(87) Numéro de publication internationale:
**WO 2008/132408 (06.11.2008 Gazette 2008/45)**

(54) **BLOC DE BETON REFRACTAIRE TEMPERE A DEFORMATION CONTROLEE**

GETEMPERTER FEUERFESTER BETON MIT GESTEUERTER VERFORMUNG

TEMPERED REFRACTORY CONCRETE BLOCK HAVING CONTROLLED DEFORMATION

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **26.03.2007 FR 0754046**

(43) Date de publication de la demande:
**06.01.2010 Bulletin 2010/01**

(73) Titulaire: **Saint-Gobain Centre de Recherches et
d'Etudes
Européen
92400 Courbevoie (FR)**

(72) Inventeurs:
• **ROULET, Frédéric**
  **F-13300 Salon De Provence (FR)**
• **JORGE, Eric**
  **F-84210 Les Valayans (FR)**

(74) Mandataire: **Tanty, François
Nony & Associés
3, rue de Penthièvre
75008 Paris (FR)**

(56) Documents cités:
WO-A-96/25371     WO-A-02/076905
FR-A1- 2 239 434     FR-A1- 2 757 503
US-A- 3 953 563     US-A- 5 147 830

EP 2 139 825 B1

**Description**

L'invention se rapporte à un béton réfractaire non-façonné, à un béton façonné et à un bloc réfractaire préfabriqué ou fini pouvant être obtenus à partir de ce béton non-façonné, et à leur utilisation pour fabriquer des revêtements de fours métallurgiques, et en particulier des revêtements de creusets ou de tuyères de hauts-fourneaux.

Les bétons réfractaires sont classiquement constitués d'un mélange d'un granulat et d'un liant hydraulique à base d'oxydes d'alcalino-terreux, en particulier à base d'aluminate de chaux. Ce dernier liant est généralement appelé « ciment ». La présence d'oxydes alcalino-terreux dans ces bétons, appelés « castable » en anglais, est cependant préjudiciable à la réfractarité et augmente la déformation sous charge.

De plus, ces oxydes réagissent en milieu réducteur.

Ainsi, les bétons réfractaires décrits dans EP 0 839 775, qui présentent une teneur en chaux (CaO) sensiblement nulle mais au moins 1 % de particules fines de magnésie (MgO), ne sont-ils pas adaptés à des creusets de hauts-fourneaux où l'atmosphère est riche en monoxyde de carbone (CO).

EP 0 030 181 décrit des bétons présentant une faible teneur en oxydes d'alcalino-terreux. Ces bétons présentent ainsi une bonne tenue à la corrosion et à l'oxydation. Leur déformation sous charge s'avère cependant difficilement contrôlable.

De manière générale, les revêtements à base de bétons réfractaires à basse teneur en oxydes d'alcalino-terreux, et plus encore les bétons réfractaires sans oxydes d'alcalino-terreux, sont connus pour développer des fissures internes lorsqu'ils sont soumis aux gradients et aux variations de température dans les conditions corrosives d'un haut-fourneau. Ces fissures favorisent l'usure et limitent donc la durée de vie de ces revêtements.

Pour constituer le revêtement des creusets de hauts-fourneaux, il est aussi connu d'utiliser des blocs carbonés. Ces blocs sont classiquement obtenus par mise en forme d'une pâte liée avec de la résine ou du brai, puis cuisson à une température supérieure à 1200 °C. Le produit est ainsi calciné et les liants organiques pyrolysés. Les blocs carbonés présentent cependant une faible résistance à l'oxydation et à la corrosion par la fonte et une résistance à l'érosion d'autant plus faible qu'ils contiennent des proportions élevées de carbone sous forme graphite.

WO 96/25371 décrit des compositions réfractaires à faibles teneurs en ciment d'aluminate de calcium.

FR 2 757 503 décrit des compositions coulables réfractaires exemptes de ciment, notamment destinées à la fabrication de blocs formant sole massive pour four de réchauffage dans des usines de laminage d'acier.

Il existe donc un besoin pour un béton réfractaire apte à résoudre, au moins partiellement, un ou plusieurs des problèmes sus-mentionnés.

Un but de l'invention est de satisfaire ce besoin.

Comme cela apparaîtra plus clairement dans la suite de la description, cette composition permet, de manière surprenante, d'obtenir une excellente résistance à la corrosion, en dépit d'une teneur faible en oxydes d'alcalino-terreux, notamment en cas d'utilisation dans un revêtement d'un creuset de haut-fourneau, et une déformabilité sous charge sensiblement linéaire.

De préférence, le béton façonné selon la présente invention présente encore une ou plusieurs des caractéristiques optionnelles suivantes.

- La matrice représente entre 10 et 60 % en masse du béton et présente une composition telle que, en pourcentages en masse sur la base de la matrice :

    - $90\% > Al_2O_3 > 60\%$

    - $40 \% > SiO_2 > 10\%$

    - oxydes d'alcalino-terreux : $\leq 0,2\%$.

- Les oxydes d'alcalino-terreux, et notamment les oxydes CaO et/ou MgO, ne sont présents qu'à titre d'impuretés dans la matrice.
- La matrice comporte plus de 1,5 %, de préférence plus de 2 %, voire plus de 5 % d'alumine hydratable. De préférence, la matrice comporte moins de 50 %, de préférence moins de 30 %, de préférence encore moins de 20 %, voire moins de 10 %, d'alumine hydratable. Ces teneurs sont plus élevées que celles requises classiquement lorsque de l'alumine hydratable est utilisée pour fluidiser une charge de départ.
- L'alumine hydratable comporte une quantité d'alumine khi-$Al_2O_3$ et/ou rho-$Al_2O_3$ supérieure à 20 %, de préférence supérieure à 50 %, de préférence supérieure à 80 %, en pourcentages massiques ou volumiques.
- Par ailleurs, les inventeurs ont découvert que d'autres alumines que les alumines de type cristallographique khi-$Al_2O_3$ ou rho-$Al_2O_3$ peuvent convenir, pourvu qu'elles présentent une reprise d'humidité, exprimée en masse par rapport à la matière sèche initiale, supérieure à 3%, de préférence supérieure à 5%, de préférence encore supérieure à 8%. Dans la suite de la description, ces alumines sont qualifiées d'alumines « à forte reprise d'humidité ».

- La matrice comporte plus de 1 %, de préférence plus de 3 %, de préférence plus de 5 % et de préférence encore plus de 10% de silice sous forme micronique, notamment sous forme de fumée de silice ou de silice broyée ou micronisée, et/ou sous forme de silice sous forme colloïdale. De préférence cependant, la teneur en silice sous forme micronique et/ou en silice sous forme colloïdale, dans la matrice, est inférieure à 40 %.
- La matrice comporte plus de 25 %, de préférence plus de 30 %, de préférence encore plus de 40 %, et/ou moins de 85 %, de préférence moins de 75 %, de préférence encore moins de 73 % d'alumine, de préférence environ 50 % d'alumine ($Al_2O_3$).
- Le rapport molaire, au sein de la matrice, de l'alumine sur la silice ($Al_2O_3/SiO_2$) est supérieur à 1, de préférence supérieur à 1,3 et/ou inférieur à 2, de préférence inférieur à 1,7. Un rapport d'environ 1,5, correspondant au rapport molaire de l'alumine sur la silice dans la mullite, est préféré entre tous.
- La matrice présente une teneur en oxyde de chrome ($Cr_2O_3$) et/ou en zircone ($ZrO_2$) inférieure à 0,5 %, de préférence inférieure à 0,3 %, de préférence encore inférieure à 0,1 %. De préférence, ces oxydes ne sont présents dans la matrice liante qu'à titre d'impuretés.
- La matrice présente une teneur totale en oxydes de métaux alcalins, notamment $Na_2O$ et $K_2O$, inférieure à 1 %.
- La matrice représente au moins 13% du béton, de préférence au moins 15 % et/ou moins de 30%.
- La matrice comporte plus de 15 % de carbure de silicium (SiC).
- Le béton comporte au moins 0,5 %, au moins 1 %, au moins 2 %, au moins 3 %, de préférence au moins 4 % de carbure de silicium et/ou moins de 10 %, de préférence moins de 7 % de carbure de silicium, en pourcentages massiques sur la base du béton.
- La matrice est constituée d'alumine, de silice et de carbure de silicium, le complément à 100 % étant constitué par des impuretés et représentant, de préférence, moins de 3 %, voire moins de 2 % ou moins de 1 %.
- Le béton comporte au moins 80% d'alumine, et/ou au moins 1 % de silice, de préférence plus de 5 % de silice, en pourcentages massiques sur la base du béton. Le béton comporte de préférence moins de 10 % de silice, en pourcentage massique sur la base du béton.
- Le béton présente une résistance à l'écrasement à froid supérieure ou égale à 55 MPa, voire supérieure à 60 MPa.
- L'agrégat est constitué de grains dont la composition comporte de l'aluminium (Al) et/ou du silicium (Si). De préférence, l'agrégat est composé pour plus de 80 % de grains de corindon ou d'autres formes d'alumine, et/ou de mullite ou de précurseurs de mullite et/ou de carbure de silicium. L'agrégat peut aussi être formé par des grains constitués de composés non oxydes ou à base de carbone. Il peut aussi être formé par des grains constitués d'un mélange des constituants précédents. Enfin, il peut être formé d'un mélange des grains mentionnés précédemment.
- Au moins 15% des grains de granulat présentent une taille entre 1 et 15 mm, de préférence entre 2,5 et 10 mm.
- Le complément à 100 % du béton est constitué par des impuretés, notamment des impuretés de Fe, Ti, Na, K, Mg ou Ca.
- Le béton a subi un tempérage à une température inférieure à 800 °C, inférieure à 700 °C, voire inférieure à 600 C et/ou supérieure à 400°C.

L'invention concerne également un béton non façonné, à l'état sec ou humide, apte à prendre en masse pour constituer un béton façonné selon l'invention ou un bloc au moins en partie constitué par un tel béton. Par « apte à prendre en masse », on entend que la composition du béton lui permet de durcir par simple activation, de préférence sans autre ajout éventuel qu'un ajout d'eau.

Le béton non façonné selon l'invention peut être coulé sur place pour réaliser un revêtement. Il peut alors être livré à l'état sec ou humide, prêt à l'emploi, conditionné par exemple en sacs ou en big-bags à l'état sec, ou en fûts à l'état humide. En variante, le béton peut être mis sous la forme d'un bloc, fini ou préfabriqué, qui sera assemblé sur site.

L'invention concerne donc également un bloc réfractaire dont au moins une partie, de préférence la totalité, est constituée par un béton réfractaire selon l'invention.

De préférence, le bloc selon l'invention présente encore une, et de préférence plusieurs, des caractéristiques optionnelles suivantes :

- Le bloc présente une masse de plus de 50 kg, de préférence de plus de 300 kg et/ou de moins de 2 tonnes. De préférence, il présente une masse d'environ 1 tonne.
- Le bloc est un préfabriqué.
- Après le stade de la préforme, le bloc n'a subi d'autre traitement thermique qu'un tempérage à une température comprise entre 400 et 600°C.

L'invention concerne aussi un bloc fini ayant de préférence subi une cuisson à une température comprise entre 1300 °C et 1500 °C.

Le procédé de fabrication d'un bloc réfractaire préfabriqué selon l'invention comprenant les étapes suivantes :

a) préparation d'une charge de départ ;

b) versement de la charge de départ dans un moule et, de préférence, mise en vibration de la charge de départ dans ce moule ;

c) séchage et durcissement de manière à obtenir une préforme,

d) tempérage de la préforme, de préférence à une température comprise entre 400 °C et 800 °C, voire entre 400 °C et 600 C, de manière à obtenir un bloc préfabriqué,

la charge de départ étant déterminée de manière qu'à l'issue de l'étape d), le bloc préfabriqué soit conforme à l'invention.

L'invention concerne enfin l'utilisation d'un béton réfractaire selon l'invention ou d'un bloc réfractaire fabriqué ou pouvant être fabriqué par le procédé ci-dessus dans un revêtement d'un four, en particulier d'un four métallurgique, ou dans un revêtement d'un haut-fourneau, en particulier dans un revêtement d'un creuset et/ou d'une tuyère d'un haut-fourneau.

Sauf mention contraire, tous les pourcentages relatifs à la composition du béton façonné ou non, sec ou humide, ou relatifs à la charge de départ, sont des pourcentages massiques exprimés par rapport à la masse de la matière minérale sèche, dont le carbure de silicium éventuel.

On appelle « béton non-façonné » un mélange particulaire sec ou humide apte à prendre en masse de manière à constituer un béton façonné.

On appelle « béton façonné » un matériau sec et solide, dont la microstructure est constituée par un granulat dont les grains sont solidarisés au moyen d'une matrice. La forme d'un béton façonné peut être quelconque. Le béton façonné peut notamment présenter la forme d'un bloc ou d'une couche, par exemple lorsqu'il résulte de la prise en masse d'un revêtement projeté. Classiquement, le béton façonné est obtenu par prise en masse d'un mélange particulaire qui a subi une étape d'activation, généralement par humidification avec de l'eau.

Un ou plusieurs traitements thermiques ultérieurs (tempérage, cuisson) peuvent améliorer la résistance mécanique du « béton façonné ».

Un béton façonné est qualifié de « préfabriqué » lorsque sa microstructure est temporaire. Sinon, il est qualifié de « fini ». Dans la présente invention, la microstructure d'un béton préfabriqué d'un revêtement d'un réacteur (four, haut-fourneau, ...) va ainsi encore évoluer après mise en place du béton, sous l'effet d'une température de service élevée, typiquement de l'ordre de 1300 à 1600 °C, résultant de la mise en chauffe de ce réacteur.

On appelle « granulat » un ensemble de grains réfractaires dont au moins 90% en masse ont une taille comprise entre 150 $\mu$m et 15 mm. La nature du granulat dans le béton selon l'invention n'est pas limitative.

Par « matrice », on entend une phase cristallisée ou non, assurant une structure continue entre les grains et obtenue, lors de la prise en masse, à partir des constituants de la charge de départ.

Par « impuretés », on entend les constituants inévitables, introduits nécessairement avec les matières premières ou résultant de réactions avec ces constituants. Les impuretés ne sont pas des constituants nécessaires, mais seulement tolérés.

Par « silice sous forme micronique », on entend une poudre de silice dont les particules, partiellement amorphes, ont un diamètre médian compris entre 0,01 et 4 $\mu$m. La silice sous forme colloïdale présente un diamètre médian de particules pouvant être plus faible, généralement de l'ordre de quelques nanomètres.

On appelle « alumine hydratable » une alumine de type cristallographique khi-$Al_2O_3$ ou rho-$Al_2O_3$ obtenue par calcination flash d'hydrargilite gamma-$Al(OH)_3$. Les alumines hydratables sont dites « de transition » et ont la propriété de s'hydrater en présence d'eau (liquide ou vapeur).

Les alumines de transition incluent les alumines hydratables mais n'y sont pas limitées. En particulier elles incluent les alumines de type gamma et bêta.

Les alumines réactives sont des alumines calcinées et classiquement broyées de manière à présenter un diamètre médian inférieur à 10 $\mu$m. Elles sont généralement essentiellement sous forme cristallographique alpha.

La « reprise d'humidité » est mesurée en plaçant dans une enceinte hermétique saturée à 100 % d'humidité à température ambiante (20 °C), à pression atmosphérique, un échantillon, par exemple de 100g, d'alumine préalablement séchée à 100 °C et pendant une durée de séchage de 5 heures. On mesure ensuite l'augmentation de la masse de l'échantillon (« reprise d'humidité ») jusqu'à saturation, c'est-à-dire jusqu'à stabilisation de la masse. La reprise d'humidité est fournie en pourcentage massique par rapport à la masse de départ sèche.

Enfin, on appelle « fibres » des structures allongées, typiquement de diamètre de 0,1 $\mu$m à 2 mm et de longueur allant jusqu'à 3 cm environ.

Dans un matériau façonné, on appelle « taille » d'une particule ou d'un grain la moyenne entre sa plus grande dimension et sa plus petite dimension, ces dimensions étant mesurées sur une coupe dudit matériau.

On appelle « tempérage » un traitement thermique d'un mélange humide, de préférence préalablement séché, à une température comprise entre 400 et 600 °C.

On appelle « « zircone » l'oxyde de zirconium $ZrO_2$.

On appelle « alumine » l'oxyde d'aluminium $Al_2O_3$.

On appelle « silice » l'oxyde de silicium $SiO_2$.

Pour fabriquer un béton réfractaire façonné selon l'invention, on peut procéder suivant les étapes décrites précédemment.

A l'étape a), les matières particulaires sont classiquement mélangées jusqu'à obtention d'un mélange homogène.

La nature et les quantités de matières premières sont déterminées de manière à ce que le béton réfractaire obtenu à l'issue de l'étape d) soit conforme à l'invention.

La façon de déterminer les proportions des constituants de la charge de départ est parfaitement connue de l'homme du métier. En particulier, l'homme du métier sait que les oxydes d'aluminium et de silicium et l'éventuel carbure de silicium présents dans la charge de départ se retrouvent dans le béton façonné. Il sait également déterminer quels constituants vont se transformer pour constituer la matrice.

Certains oxydes peuvent cependant être apportés par les additifs classiquement utilisés pour fabriquer des bétons, par exemple les agents de frittage, les dispersants comme les polyphosphates de métaux alcalins ou les dérivés méthacrylates. La composition de la charge de départ peut donc varier, notamment en fonction des quantités et de la nature des additifs présents, ainsi que du degré de pureté des matières premières utilisées.

De préférence, la charge de départ est déterminée pour que le carbure de silicium, l'alumine et la silice représentent au moins 80 %, de préférence au moins 95 % de la masse minérale sèche du béton façonné.

Le granulat peut être constitué de grains à base d'oxydes réfractaires ou de réfractaires non oxydes, comme par exemple le carbone, notamment l'anthracite ou le graphite, ou par exemple des carbures comme le carbure de silicium (SiC). En particulier, les grains peuvent être des grains d'alumine, de zircone, de zircon, de carbure de silicium ou de nitrure de silicium, d'un mélange de ces derniers, voire des particules réfractaires sphériques granulés.

La silice peut être apportée sous forme de silice micronique (par exemple sous forme de fumée de silice ou de silice micronisée) ou de silice colloïdale.

La matrice présente une teneur en CaO et/ou en MgO la plus faible possible, par exemple inférieure à 0,15 %, voire inférieure à 0,1 %. La teneur en CaO et/ou en MgO peut même être réduite à moins de 0,05 %.

De préférence, la teneur en zircone ($ZrO_2$) susceptible de constituer la matrice est cependant limitée de manière à ce que, dans la matrice, elle soit inférieure à 2 %, de préférence à 1 %, de préférence encore inférieure à 0,5 %. La présence de zircone conduit en effet à des carbures ou des nitrures dans les conditions d'ambiance d'un haut-fourneau.

La teneur en oxyde de chrome ($Cr_2O_3$) de la matrice est également limitée de manière à être, de préférence, inférieure à 0,5 %, de préférence inférieure à 0,2 %, en pourcentage massique sur la base de la matrice, de préférence encore sensiblement nulle. L'oxyde de chrome conduit en effet, en conditions industrielles, à des contraintes très exigeantes en matière d'hygiène, de sécurité et d'environnement.

Il est également utile de limiter la teneur en oxydes de métaux alcalins de manière que leur quantité totale dans le béton façonné soit inférieure à 1 % par rapport à la masse minérale du béton façonné sec. Avantageusement, on évite ainsi un gonflement rédhibitoire lié à la formation de phases composées d'alumine $Al_2O_3$, de silice $SiO_2$ et d'oxydes d'alcalins ($K_2O$, $Na_2O$) du type leucite ou kaliophyllite.

De préférence, les oxydes de chrome, de zirconium, de calcium, de magnésium et de métaux alcalins ne sont introduits dans la charge de départ qu'à titre d'impuretés.

De préférence, le mélange de base comporte entre 0,1 % et 2 %, de préférence moins de 0,5 % d'un dispersant, en pourcentages en masse par rapport à la masse de la charge de départ sèche. Le dispersant peut par exemple être choisi parmi les polyphosphates de métaux alcalins ou les dérivés méthacrylates. Tous les dispersants connus sont envisageables, ioniques purs, par exemple de l'hexametaphosphate de soude (HMPNa), stériques purs, par exemple de type polyméthacrylate de sodium, ou combinés. L'ajout d'un dispersant permet de mieux répartir les particules fines, de taille inférieure à 150 microns, et favorise ainsi la résistance mécanique de la matrice.

De préférence, la charge de départ comporte également entre 0,01 % et 0,1 % de fibres organiques du type vinylique ou polypropylène, en pourcentages massiques sur la base de la charge de départ sèche. Ces fibres facilitent avantageusement l'évacuation de l'eau pendant le séchage.

Pour améliorer encore la résistance à la fracturation en service, la charge de départ peut encore comporter des fibres métalliques ou céramiques, la teneur massique de ces fibres dans la charge de départ étant de préférence comprise entre 0,01 et 5%, en pourcentages massiques sur la base de la charge de départ sèche.

La charge de départ sèche constitue un béton non façonné selon l'invention, qui peut être conditionné et livré sous cette forme.

Après avoir malaxé à sec suffisamment pour obtenir un mélange homogène, de l'eau est classiquement ajoutée à la charge de départ. De préférence, on ajoute au moins 2 %, de préférence au moins 3 % et moins de 10 %, de préférence moins de 6 %, de préférence encore moins de 5 %, d'eau, en pourcentages en masse par rapport à la masse minérale de la charge de départ, hormis l'eau. L'eau est ajoutée progressivement dans le malaxeur en fonctionnement jusqu'à obtention d'un mélange humide sensiblement homogène. L'ajout d'eau provoque l'activation de la charge de départ, c'est-à-dire engage son processus de prise en masse.

Le mélange humide constitue un béton non façonné selon l'invention, qui peut être conditionné, par exemple en fûts, et livré sous cette forme.

A l'étape b), le mélange humide est coulé dans un moule de manière à obtenir un bloc aux dimensions souhaitées, par exemple 1,0 x 0,8 x 0,4 m$^3$.

De préférence, au moins une des dimensions du bloc est supérieure à 0,4 m, de préférence à 0,6 m, de préférence à 0,8 m.

L'utilisation de gros blocs permet avantageusement de réduire le nombre de joints par rapport à un assemblage de briques réfractaires. Les attaques corrosives par l'intermédiaire des joints sont ainsi limitées.

L'utilisation de gros blocs permet également une installation rapide du revêtement réfractaire. L'utilisation de blocs réfractaires évite en effet de devoir effectuer un séchage après mise en place du revêtement.

Pour améliorer la mise en place du mélange dans le moule, on utilise classiquement une aiguille vibrante comme celles utilisées dans le génie civil. La vibration de l'aiguille au sein du mélange humide est de préférence maintenue pendant une durée comprise entre 3 et 20 minutes, en fonction de la taille du bloc.

A l'issue de l'étape de vibration, le moule est de préférence recouvert d'une bâche afin de réduire le séchage superficiel.

A l'étape c), on procède au séchage de manière à durcir le mélange humide.

Pour faciliter le durcissement, le moule est de préférence immédiatement placé en étuve, dès la fin de l'étape b), de préférence à une température comprise entre 40 et 70 °C et pendant une durée variable en fonction des dimensions du bloc, en général de quelques minutes à 24 heures.

Après durcissement, la préforme peut être démoulée.

A l'étape d), un tempérage est réalisé afin d'éliminer les hydrates. Ce tempérage est de préférence effectué sous air, de préférence encore à une température supérieure à 400 °C, de préférence supérieure à 450 C et, de préférence encore, inférieure à 800°C, voire inférieure à 600 C. La vitesse de montée en température et la durée de palier à la température maximale sont classiquement adaptées en fonction des dimensions du bloc et de la charge du four de tempérage.

La durée de tempérage peut être supérieure à 3 heures, supérieure à 10 heures, voire supérieure à 20 heures, voire supérieure à plusieurs jours, en fonction de la masse de béton à tempérer et de la température du tempérage.

On considère que le tempérage est terminé lorsque sensiblement tous les hydrates sont éliminés.

Des essais de routines permettent de déterminer la durée de tempérage optimale.

A l'issue du tempérage, le bloc est un bloc préfabriqué selon l'invention qui présente avantageusement une résistance mécanique suffisante pour pouvoir être manipulé, transporté et assemblé pour former un revêtement d'un four, d'une tuyère ou d'un creuset.

Le bloc réfractaire préfabriqué, après tempérage et avant cuisson, présente avantageusement les caractéristiques suivantes :

- une résistance à la corrosion remarquable ;
- un coefficient d'expansion thermique libre, c'est-à-dire sans charge, qui évolue de manière sensiblement linéaire sous l'effet d'une augmentation de la température entre 20°C et 1600 °C ;
- un coefficient d'expansion thermique libre moyen, entre 20 et 800 °C, $C_{20-800}$, inférieur à $10.10^{-6}$/°C, correspondant à une expansion thermique libre inférieure à 1,25 % entre la température ambiante de 20 °C et la température de 800 °C ;
- un rapport entre le coefficient d'expansion thermique libre moyen ($C_{800-1500}$) entre 800 et 1500 °C sur celui ($C_{20-800}$) entre 20 et 800 °C compris entre 0,7 et 1,3, voire entre 0,8 et 1,2, et même compris entre 0,9 et 1,1 ;
- un comportement sous charge remarquable, et notamment un coefficient d'expansion thermique moyen sous une charge de 2 bars compris entre $2.10^{-6}$ et $9.10^{-6}$ /°C, correspondant à une expansion thermique sous charge comprise entre 0,3 et 1,4 % entre 20 et 1600 °C ;
- une expansion thermique telle que, pour toute température T comprise entre 600 et 1600 °C,

$$L'_{20-600} \leq L'_{20-T} \leq L'_{20-600} + 1,3 * L'_{20-600}*(T - 600)/(600 - 20)$$

où $L'_{20-600}$ et $L'_{20-T}$ désignent les expansions thermiques sous charge de 2 bars, entre 20 et 600°C et entre 20 et T°C, respectivement ;
- une porosité ouverte du béton fini inférieure à 15% ;
- un diamètre médian de pores dans le béton fini inférieur à 0,5 $\mu$m, voire inférieur à 0,1 $\mu$m;
- une perméabilité très faible, ce qui améliore la résistance à la corrosion. En particulier, la perméabilité sous air et à température ambiante (20°C) peut être inférieure à 0,5 mDarcy (1 mDarcy=0,987 * $10^{-12}$m$^2$).

De manière surprenante les inventeurs ont constaté que le diamètre médian des pores peut être inférieur à 0,05 $\mu$m, voire inférieur à 0,02 $\mu$m. Avantageusement, de tels diamètres de pores confèrent une très bonne résistance à l'infiltration, et donc une bonne résistance à la corrosion.

De manière surprenante, les inventeurs ont également constaté que la surface spécifique, classiquement mesurée par la méthode B.E.T. (cette méthode, par adsorption de gaz inerte, a été développée par S. Brunauer, P.H. Emmet et J. Teller et est bien connue de l'homme de la technique) peut être supérieure à 2 m$^2$/g, supérieure à 2,5 m$^2$/g, voire supérieure à 4m$^2$/g ou à 5 m$^2$/g. La surface spécifique peut varier en fonction de la quantité de matrice.

Ces valeurs de diamètre médian de pores et de surface spécifique sont particulièrement élevées, les bétons conventionnels présentant typiquement un diamètre médian de pores de l'ordre de 0,1 à 1$\mu$m et une surface spécifique de l'ordre de 1 m$^2$/g.

L'expansion thermique, exprimée en pourcentage, correspond à l'allongement (si variation positive) ou au retrait (si variation négative) d'une éprouvette sous l'effet de l'accroissement de la température, au sens de la norme NFB40308 en l'absence de charge ou de la norme ISO1893 dans le cas de l'application d'une charge, l'état « 0 » étant l'état de départ de l'éprouvette avant la mise en température.

Le coefficient d'expansion thermique représente la variation d'allongement entre deux températures de référence et est exprimé en 10$^{-6}$ /°C.

La linéarité de la courbe de déformation libre lors du développement du béton permet avantageusement de positionner précisément les joints de dilatation dans le revêtement à fabriquer, ce qui permet de réduire efficacement l'apparition de contraintes de dilatation dans ce revêtement et/ou dans une éventuelle enveloppe externe métallique en contact avec le revêtement.

Le bloc préfabriqué peut être mis en place dans sa position de service sans avoir été cuit.

Les caractéristiques du béton préfabriqué évolueront alors suite à la mise en chauffe du four ou du haut-fourneau, sous l'effet de températures typiquement comprises entre 1300 et 1650 °C.

Les caractéristiques finales du revêtement réfractaire sont alors obtenues après la mise en chauffe du réacteur, ce qui permet un gain en énergie appréciable et contribue à la préservation de l'environnement.

Les essais suivants sont fournis à des fins illustratives et ne limitent aucunement l'invention.

Pour ces exemples, différents blocs préfabriqués ont été fabriqués suivant les étapes a) à d) du procédé décrit précédemment.

Les matières suivantes ont été mises en oeuvre :

- mélange de grains de corindon brun électrofondu commercialisé par la Société Alcan, moins de 30 % des grains, en masse, présentant une taille comprise entre 1 et 15 mm, et 60 %, en masse, présentant une taille comprise entre 0,2 et 5 mm ;
- poudre de corindon noir électrofondu de taille inférieure à 150 microns, commercialisée par la société Alcan,
- poudre de précurseur de mullite à base d'andalousite présentant une taille inférieure à 500 microns, commercialisée par la Société Damrec ;
- poudre de carbure de silicium (SiC) présentant une taille inférieure à 100$\mu$m environ ;
- fumée de silice du type 983 U, commercialisée par la Société Elkem ;
- poudre d'alumine calcinée présentant un diamètre médian d'environ 4 microns, commercialisée par la Société Almatis ;
- ciment à base d'aluminate de chaux CA 270, commercialisé par la Société Alcoa ;
- alumine réactive hydratable du type Alphabond 300, commercialisée par la Société Almatis ;
- dispersant HMPNa en poudre, commercialisé par la Société Rhodia.

La perméabilité a été mesurée sous air et à température ambiante, conformément à la norme ISO 8841.

Les tests de corrosion ont été effectués en plaçant des éprouvettes de dimensions 30 x 30 x 150 mm$^3$ en rotation à une vitesse linéaire de 2 cm par seconde, dans un laitier de haut-fourneau et de fonte, à 1500 °C, pendant 6 heures sous Argon.

On a mesuré le degré d'attaque à l'interface entre la fonte et le laitier, et en contact avec la fonte, c'est-à-dire la réduction d'épaisseur de l'échantillon, en pourcentage par rapport à l'épaisseur initiale.

Les mesures des coefficients d'expansion thermique libre ont été effectuées sur des éprouvettes cylindriques de 50 mm de diamètre et de 50 mm de hauteur, selon la norme NFB 40308. Les mesures des coefficients d'expansion thermique sous charge ont été effectuées sur des éprouvettes de même dimension, selon la norme ISO 1893.

La porosité ouverte a été mesurée selon la norme ISO 5017.

Le diamètre médian des pores a été déterminé à partir de mesures de distribution de diamètres de pores faites par porosimétrie au mercure.

Les mesures de perméabilité ont été effectuées sur des éprouvettes cylindriques de 50 mm de diamètre et 30 mm d'épaisseur.

Les mesures de résistance mécanique à l'écrasement à froid ont été réalisées sur des éprouvettes cylindriques de 50 mm de diamètre et 50 mm de hauteur, selon la norme NFB 40322.

Les tests d'oxydation ont été effectués sur des éprouvettes de 30 x 30 x 150 mm³, sous vapeur d'eau, à une température de 1000 °C, pendant 24 heures, selon la norme ASTM C863.

Les tableaux 1 et 2 suivants résument les résultats obtenus.

Tableau 1

| | A | B | Exemple 1 | Exemple 2 |
|---|---|---|---|---|
| **Charge de départ sèche (en pourcentages massiques sur la base de la matière minérale)** | | | | |
| Granulat : Mélange de Grains de Corindon brun | 82 | 77 | 69 | |
| Granulat de carbone et graphite | | | | 75 |
| Matrice liante : composition ci-dessous | 18 | 23 | 31 | 25 |
| Poudre de corindon noir électrofondu (taille inférieure à 150μm) | 3 | 3 | 3 | |
| Poudre de précurseur de mullite à base d'andalousite | | | 10 | |
| Poudre de SiC (90 % en masse <50 microns) | - | 5 | 0 | |
| Fumée de Silice Type 983 U | 5 | 5 | 7 | |
| Poudre d'Alumine Calcinée Diamètre médian D50 # 4 μm | 7 | 7 | 10 | |
| Ciment à base d'Aluminate de CaO | 0 | 0 | 1 | |
| Alumine réactive hydratable Type Alphabond 300 | 3 | 3 | 0 | |
| Total de la matière minérale sèche | 100 | 100 | 100 | |
| **Additifs ajoutés à la charge de départ (en pourcentages massiques sur la base de la matière minérale sèche)** | | | | |
| | | | | |
| Dispersant HMPNa en poudre | +0,2 | +0,2 | +0,2 | |
| Eau | +4,0 | +4,0 | +4,0 | |
| **Composition chimique massique de la matrice liante, en pourcentages massiques** | | | | |
| $Al_2O_3$ | 71 | 55 | 61 | 30 |
| $SiO_2$ | 27 | 21 | 36 | 30 |
| $Al_2O_3 + SiO_2$ | 98 | 76 | 97 | 60 |
| CaO+MgO | <0,2 | <0,2 | 0,45 | 0,3 |
| Rapport molaire $Al_2O_3/SiO_2$ | 1,5 | 1,5 | 1,0 | 0,6 |

(suite)

| Composition chimique massique du bloc, en pourcentages massiques mesurée sur échantillon après calcination 600°C / air pendant 30 minutes | | | | |
|---|---|---|---|---|
| $Al_2O_3$ | 90 | 87 | 89 | 7,0 |
| $SiO_2$ | 7 | 6,0 | 7,0 | 8,0 |
| SiC | <0,5 | 4,8 | <0,5 | 8,0 |
| Carbone non lié chimiquement (notamment carbone anthracite, graphite) | <0,5 | <0,5 | <0,5 | 76 |
| Total des Impuretés* Dont CaO | 2,5 0,25 | 2,1 0,25 | 3,5 0,5 | 1,0 0,1 |
| *Le complément à 100% de la composition chimique est constitué par des impuretés, notamment par des impuretés de Fe, Ti, Na, K, Mg et Ca | | | | |

Tableau 2

| | A | B | Exemple 1 | Exemple 2 |
|---|---|---|---|---|
| Propriétés du bloc préfabriqué (après tempérage à 500°C, sous air) | | | | |
| Porosité ouverte (PO), en % | 11 | 9 | 13 | 18,1 |
| Diamètre médian de pores ($\mu$m) | 0,02 | 0,02 | 0,2 | 0,05 |
| Perméabilité sous air à température ambiante (mDarcy) | 0,4 | 0,25 | 1,1 | 0,4 |
| Surface spécifique (mesurée par la méthode BET) en $m^2$/g | 5,3 | 5,5 | 1,4 | |
| Résistance à l'écrasement à froid (MPa) Test réalisé selon norme NFB40322 | 65 | 55 | 50 | 25 |
| Coefficient d'expansion thermique libre (* $10^{-6}$/°C) (test sans charge réalisé selon norme NFB40308) | Linéaire | Linéaire | Non linéaire | Linéaire |
| entre 20 et 800°C ($C_{20-800}$) | 7,7 | 7,7 | 8,5 | 4,5 |
| entre 800 et 1500°C ($C_{800-1500}$) | 7,5 | 7,5 | 15,0 | 4,5 |
| Rapport $C_{800-1500}$/ $C_{20-800}$ | 1,0 | 1,0 | 1,8 | 1,0 |
| Expansion thermique sous charge de 2 bars (%) (test sous charge réalisé selon norme ISO1893) | | | | |
| entre 20 et 600°C ($L'_{20-600}$) | +0,5 | +0,5 | +0,5 | +0,3 |
| entre 600 et 1600°C ($L'_{600-1600}$) | +0,5 | +0,5 | +0,35 | +0,5 |
| Variations minimale et maximale entre 600 et 1600°C par rapport à la valeur à 600°C | +0,1/ +0,25 | +0,1/ +0,25 | -0,40/ +0,50 | +0,0/ +0,5 |
| Test d'oxydation sous vapeur d'eau /1000°C/24h Prise (+)/ perte (-) de masse, % selon ASTM C 863 | +0,2 | +0,9 | +0,2 | -90,0 (*) |
| Test de corrosion (réduction d'épaisseur en pourcentage) -à l'interface fonte-laitier -en contact avec la fonte | 25 0 | 18 0 | 33 0 | 10 5 |
| (*) : Destruction quasi complète de l'éprouvette | | | | |

On considère que le coefficient d'expansion thermique libre évolue linéairement lorsqu'il existe une droite telle que le coefficient de régression linéaire ($R^2$) de la courbe de dilatation, sans charge, par rapport à cette droite est supérieur ou égal à 0,95 sur le domaine 20 °C-1600 °C.

Les exemples 1 et 2 sont fournis à titre d'exemples comparatifs. L'exemple 1 est représentatif des produits à très basse teneur en ciment alumineux, tandis que l'exemple 2 est représentatif des produits carbonés.

Le tableau 1 montre clairement que les bétons réfractaires A et B selon l'invention présentent une perméabilité à l'air plus faible et une taille de pores médiane plus faible, y compris par rapport au produit carboné de l'exemple 1. Les bétons selon l'invention présentent également une résistance à la corrosion par le laitier et la fonte supérieure à celle des produits comportant du ciment alumineux et une résistance à l'oxydation sous vapeur d'eau nettement supérieure à celle des produits carbonés de l'exemple 2. Dans les applications considérées, les bétons selon l'invention constituent un compromis optimal.

Bien entendu, l'invention n'est pas limitée aux modes de réalisation décrits, fournis à titre illustratif et non limitatif.

En particulier, le béton selon l'invention peut être constitué sur place, le mélange humide étant projeté, par une technique conventionnelle, sur la paroi à recouvrir. Le béton de l'invention peut également servir dans d'autres applications que les hauts-fourneaux, par exemple comme revêtement d'un four servant à la fusion de métaux.

## Revendications

**1.** Béton réfractaire façonné comportant un agrégat réfractaire lié par une matrice liante, la matrice représentant entre 10 et 60 % en masse du béton et présentant une composition telle que, en pourcentages en masse sur la base de la matrice :

- $Al_2O_3$ + $SiO_2$ > 70 %
- 50% > $SiO_2$ > 10%
- $Al_2O_3$ hydratable et/ou présentant une reprise d'humidité supérieure à 3 % : > 1 % et < 20 %
- oxydes d'alcalino-terreux : $\leq$ 0,2 %.

**2.** Béton selon la revendication précédente, dans lequel la matrice comporte moins de 10 % d'alumine hydratable.

**3.** Béton selon l'une quelconque des revendications précédentes, dans lequel la matrice comporte plus de 5 % d'alumine hydratable.

**4.** Béton selon l'une quelconque des revendications précédentes, dans lequel les oxydes d'alcalino-terreux ne sont présents qu'à titre d'impuretés.

**5.** Béton selon l'une quelconque des revendications précédentes, dans lequel la matrice comporte plus de 40 % d'alumine $Al_2O_3$.

**6.** Béton selon l'une quelconque des revendications précédentes, dans lequel la matrice comporte plus de 0,5 % de carbure de silicium SiC.

**7.** Béton selon la revendication précédente, dans lequel la matrice comporte plus de 15 % de carbure de silicium SiC.

**8.** Béton selon l'une quelconque des revendications précédentes, dans lequel le rapport molaire au sein de la matrice, de l'alumine sur la silice $Al_2O_3$/$SiO_2$ est supérieur à 1 et inférieur à 2.

**9.** Béton selon l'une quelconque des revendications précédentes, dans lequel le rapport molaire au sein de la matrice, de l'alumine sur la silice $Al_2O_3$/$SiO_2$ est supérieur à 1,3 et inférieur à 1,7.

**10.** Béton selon l'une quelconque des revendications précédentes, comportant au moins 80 % d'alumine et/ou au moins 1 % de silice, en pourcentages massiques.

**11.** Béton selon l'une quelconque des revendications précédentes, dans lequel l'alumine hydratable comporte plus de 20 % d'alumine de type cristallographique khi-$Al_2O_3$ et/ou rho-$Al_2O_3$.

**12.** Béton selon l'une quelconque des revendications précédentes, présentant un diamètre médian de pores inférieur à 0,05 $\mu$m et/ou une surface spécifique supérieure à 2 m$^2$/g.

13. Béton selon l'une quelconque des revendications précédentes, tempéré à une température supérieure à 400°C et non fritté.

14. Bloc réfractaire, fini ou préfabriqué, présentant une masse de plus de 50 kg et dont au moins une partie est constituée par un béton réfractaire façonné selon l'une quelconque des revendications précédentes.

15. Utilisation d'un béton réfractaire selon l'une quelconque des revendications 1 à 13 ou d'un bloc selon la revendication 14 dans un revêtement d'un four ou dans un revêtement d'un haut-fourneau.

**Claims**

1. Molded refractory concrete containing a refractory aggregate bound by a binding matrix, the matrix representing between 10 and 60% by weight of the concrete and exhibiting a composition, in percentages by weight based on the matrix, such as:

   - $Al_2O_3$ + $SiO_2$ > 70%
   - 50% > $SiO_2$ > 10%
   - $Al_2O_3$ which is hydratable and/or exhibits a moisture uptake greater than 3%: >1% and <20%
   - alkaline earth oxides: ≤0.2%.

2. Concrete as claimed in the previous claim, **characterized in that** the matrix contains less than 10% of hydratable alumina.

3. Concrete as claimed in the previous claim, **characterized in that** the matrix contains more than 5% of hydratable alumina.

4. Concrete as claimed in any one of the previous claims, **characterized in that** the alkaline earth oxides are only present as impurities.

5. Concrete as claimed in the previous claim, **characterized in that** the matrix contains more than 40% of alumina $Al_2O_3$.

6. Concrete as claimed in any one of the previous claims, **characterized in that** the matrix contains more than 0.5% of silicon carbide SiC.

7. Concrete as claimed in any one of the previous claims, **characterized in that** the matrix contains more than 15% of silicon carbide SiC.

8. Concrete as claimed in any one of the previous claims, **characterized in that** the molar ratio within the matrix of alumina to silica $Al_2O_3/SiO_2$ is greater than 1 and less than 2.

9. Concrete as claimed in the previous claim, **characterized in that** the molar ratio within the matrix of alumina to silica $Al_2O_3/SiO_2$ is greater than 1.3 and less than 1.7.

10. Concrete as claimed in any one of the previous claims, containing at least 80% of alumina and/or at least 1% of silica, as percentages by weight.

11. Concrete as claimed in any one of the previous claims, **characterized in that** the hydratable alumina contains more than 20% of alumina of khi-$Al_2O_3$ and/or rho-$Al_2O_3$ crystallographic type.

12. Concrete as claimed in any one of the previous claims, exhibiting a median pore diameter less than 0.05 μm and/or a specific surface area greater than 2 $m^2$/g.

13. Concrete as claimed in any one of the previous claims, tempered to a temperature of more than 400°C and not sintered.

14. Finished or prefabricated refractory block, exhibiting a weight of more than 50 kg and at least one part whereof is made up of a molded refractory concrete as claimed in any one of the previous claims.

**15.** Utilization of a refractory concrete as claimed in any one of claims 1 to 13 or of a block as claimed in claim 14 in a lining of a furnace or in a lining of a blast furnace.

**Patentansprüche**

**1.** Geformter feuerfester Beton, der einen feuerfesten Zusatz enthält, welcher durch eine Bindungsmatrix gebunden ist, wobei die Matrix zwischen 10 und 60% in der Betonmasse darstellt und eine Zusammensetzung in Massenprozenten auf der Basis der Matrix wie folgt aufweist:

- $Al_2O_3$ + $SiO_2$ > 70%
- 50% > $SiO_2$ > 10%
- hydratisierbares $Al_2O_3$ und/oder einen Feuchtigkeitsgehal oberhalb von 3% : > 1% und < 20%
- Oxide der alkalischen Erden: ≤ 0,2%.

**2.** Beton nach dem vorgehenden Anspruch, in welchem die Matrix weniger als 10% Aluminiumoxid aufweist.

**3.** Beton nach einem der vorhergehenden Ansprüche, in welchem die Matrix mehr als 5% des hydratisierbaren Aluminiumoxids enthält.

**4.** Beton nach einem der vorhergehenden Ansprüche, in welchem die Oxide der alkalischen Erden lediglich als Verunreinigungen vorliegen.

**5.** Beton nach einem der vorhergehenden Ansprüche, in welchem die Matrix mehr als 40% des Aluminiumoxids $Al_2O_3$ enthält.

**6.** Beton nach einem der vorhergehenden Ansprüche, in welchem die Matrix mehr als 0,5% Siliciumcarbid SiC enthält.

**7.** Beton nach dem vorhergehenden Anspruch, in welchem die Matrix mehr als 15% Siliciumcarbid SiC enthält.

**8.** Beton nach einem der vorhergehenden Ansprüche, in welchem die molare Beziehung in der Mitte der Matrix von Aluminiumoxid zu Siliciumoxid $Al_2O_3$/$SiO_2$ größer ist als 1 und kleiner als 2.

**9.** Beton nach einem der vorhergehenden Ansprüche, in welchem die molare Beziehung in der Mitte der Matrix von Aluminiumoxid zu Siliciumoxid $Al_2O_3$/$SiO_2$ größer als 1,3 und kleiner als 1,7 ist.

**10.** Beton nach einem der vorhergehenden Ansprüche, bestehend wenigstens aus 80% Aluminiumoxid und /oder wenigstens 1% Siliciumoxid ausgedrückt in Massenprozenten.

**11.** Beton nach einem der vorhergehenden Ansprüche, in welchem das hydratisierbare Aluminiumoxid mehr als 20% des Aluminiumoxids vom kristallographischen Typ khi-$Al_2O_3$ und/oder rho-$Al_2O_3$ beinhaltet.

**12.** Beton nach einem der vorhergehenden Ansprüche, welcher einen mittleren Durchmesser der inneren Poren von 0,05μm und/oder eine spezifische Oberfläche größer als 2m$^2$/g aufweist.

**13.** Beton nach einem der vorhergehenden Ansprüche, welcher bei einer Temperatur oberhalb von 400°C getempert und nicht gesintert ist.

**14.** Feuerfester Block, welcher fertig oder vorfabriziert ist, welcher eine Masse von mehr als 50 kg aufweist und von dem mindestens ein Teil durch einen geformten feuerfesten Beton nach einem der vorhergehenden Ansprüche gebildet ist.

**15.** Verwendung eines feuerfesten Betons nach einem der vorhergehenden Ansprüche 1 bis 13 oder eines Blocks nach dem Anspruch 14 in der Auskleidung eines Ofens oder in der Auskleidung eines Hochofens.

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0839775 A
- EP 0030181 A
- WO 9625371 A
- FR 2757503